# FASCICULE DE BREVET EUROPEEN

(11) **EP 3 758 907 B1**
(45) Date de publication et mention de la délivrance du brevet: **06.11.2024**
(21) Numéro de dépôt: 19708098.9
(22) Date de dépôt: 28.02.2019
(51) Int. Cl.: B29C 45/14, B29C 45/16, B60R 16/02, B60R 16/023, B60S 1/02, H01Q 1/32, H01Q 1/42, H05B 3/26, H01Q 1/02

(54) **PROCÉDÉ DE FABRICATION D'UN ÉLÉMENT D'UNE PIÈCE DE CARROSSERIE COMPORTANT UN SYSTÈME DE DÉGIVRAGE**
VERFAHREN ZUR HERSTELLUNG EINES ELEMENTS EINES KAROSSERIETEILS MIT ENTEISUNGSSYSTEM
METHOD FOR MANUFACTURING AN ELEMENT OF A BODYWORK PART COMPRISING A DE-ICING SYSTEM

(30) Priorité: 01.03.2018 FR 1851811
(43) Date de publication de la demande: 06.01.2021
(73) Titulaire: OPmobility SE, 69007 Lyon (FR)
(72) Inventeur: STABLO, Frédéric, 38390 Porcieu Amblagnieu (FR); TRESSE, David, 01390 Saint-André De Corcy (FR)
(74) Mandataire: LLR
(86) Numéro de dépôt international: PCT/EP2019/054997
(87) Numéro de publication internationale: WO 2019/166553

(56) Documents cités:
- CN-Y- 201 300 816
- DE-A1- 102014 205 108
- DE-A1- 19 927 999

## Description

L'invention concerne le domaine de la fabrication d'un élément de carrosserie en matière plastique, destiné à être monté sur une pièce de carrosserie de véhicule automobile. De nombreux véhicules modernes sont équipés d'éléments de carrosserie en matière plastique pouvant équiper par exemple un hayon arrière, un flanc de portière, des pare-chocs avant et arrière, etc.

En particulier, depuis l'introduction des systèmes d'assistance à la conduite, on a besoin de placer sur certaines pièces de carrosserie des capteurs de différentes sortes, afin de mesurer des paramètres physiques extérieurs représentatifs de l'environnement extérieur du véhicule automobile. L'ensemble des valeurs de ces paramètres forme des informations disponibles en temps réel sur l'environnement du véhicule.

On utilise alors des éléments de carrosserie, rapportés sur la pièce de carrosserie, pouvant, par exemple, jouer un rôle de radôme : c'est-à-dire un élément transparent aux ondes électromagnétiques protégeant et cachant des capteurs.

A titre d'exemple, les pare-chocs sont désormais fréquemment équipés de radars de proximité qui permettent d'assister le conducteur lors des phases de manoeuvre de stationnement du véhicule automobile à basse vitesse.

Certains capteurs, comme celui cité dans l'exemple ci-dessus, peuvent voir leur fonctionnement normal déréglé par la présence d'une couche de glace, de neige ou de givre en cas de température en dessous de 10 degré Celsius car le mouvement du véhicule a un effet négatif sur la température, on peut donc observer des phénomènes de givrage même à des températures positives. Une couche de givre vient perturber le passage normal des ondes électromagnétiques et est une source d'erreur dans la mesure des paramètres physiques extérieurs.

Afin d'éviter un tel phénomène, qui vient non seulement rendre le système d'assistance inutilisable, mais qui de surcroit peut générer de fausses alarmes, il est indispensable de prévoir un système de dégivrage sur l'élément de carrosserie (sur la zone de la pièce de carrosserie qui sert de radôme par exemple).

Un tel système de dégivrage est traditionnellement formé d'une piste chauffante constituée de fils capables de transformer une énergie électrique en énergie thermique, associée à deux plaques de connexion à chaque extrémité de la piste chauffante afin de l'alimenter en un courant électrique, le tout étant positionné sur un élément de pièce de carrosserie et à proximité d'un capteur. Les documents CN201300816Y et DE19927999 décrivent des procédés de production de pièces de véhicules chauffées. L'énergie thermique ainsi dégagée permet de dégivrer localement la pièce dans le cas où une couche de givre s'est formée. La piste chauffante, pour éviter de perturber le passage des ondes électromagnétiques, doit être positionnée selon une géométrie particulière que nous désignerons dans le texte par un positionnement « en serpentin ». Pour la clarté de l'exposé, on définit une piste chauffante positionnée en « serpentin » de la façon suivante : une piste chauffante en serpentin suit une ligne qui décrit des segments parallèles avec des virages à 180° entre deux segments qui tournent alternativement dans un sens, puis dans le sens opposé à ce sens avec une distance constante entre deux segments parallèles. Par extension, une piste positionnée en serpentin désigne une piste dont le positionnement permet le passage des ondes électromagnétiques caractérisées par une certaine plage de fréquence.

En effet, l'exactitude du positionnement de la piste chauffante est très importante pour éviter qu'elle ne fasse obstacle au passage des ondes électromagnétiques, notamment le parallélisme entre les différents segments des pistes chauffantes et l'espacement entre ces pistes chauffantes doit être respecté très précisément. À chaque fréquence d'onde électromagnétique va correspondre une configuration du positionnement de la piste chauffante optimale pour que cette piste chauffante soit transparente vis-à-vis du passage de cette onde électromagnétique.

Afin de fabriquer un élément de carrosserie, il a déjà été proposé de placer des plaques de connexion et une piste conductrice dans un moule, et de mouler sous les plaques de connexion et sous la piste conductrice un élément de pièce de carrosserie.

Une telle réalisation ne protège pas les plaques de connexion et la piste conductrice des agressions pouvant survenir depuis la face intérieure de l'élément de carrosserie une fois monté sur un véhicule, comme par exemple la corrosion. Les vibrations et les secousses peuvent également modifier et/ou endommager le système de dégivrage sur le long terme. Le moulage de l'élément de carrosserie est rendu complexe par la présence des broches qui doivent être maintenues en partie en dehors de la zone de moulage, afin de ne pas être recouverte de matière plastique pour garder leur propriété conductrice. L'invention a pour but de remédier à ces inconvénients en proposant un procédé qui permet d'assurer une bonne mise en place, et une bonne adhésion du système de dégivrage sur l'élément d'une pièce de carrosserie, que ce soit pendant la phase de fabrication que pendant la phase d'utilisation, de façon simple, efficace et étanche, procurant au dispositif final une fiabilité et une durée de vie très importante.

Dans ce but, l'invention a notamment pour objet un procédé de fabrication d'un élément d'une pièce de carrosserie caractérisé en ce que :
- on fabrique un élément en matière plastique doté d'au moins un logement situé sur une première face dudit élément ;
- on positionne au moins une plaque de connexion dotée d'une broche dans ledit logement, de façon à ce que ladite broche fasse saillie sur une seconde face dudit élément en matière plastique opposée à la première face ;

- on positionne sur une des première et seconde faces au moins une piste chauffante en contact avec la plaque de connexion ;
- on surmoule la face de l'élément en matière plastique portant la piste chauffante.

Ainsi la plaque de connexion et la piste chauffante ne peuvent pas bouger quelles que soient les secousses et les vibrations auxquelles est soumis l'élément d'une pièce de carrosserie. Lors du procédé de fabrication, le positionnement de la piste chauffante est également constant. La connexion entre la plaque de connexion et la piste chauffante est très fiable, la piste chauffante et les plaques conductrices sont très bien protégées avec une excellente étanchéité et les agressions extérieures telles que la corrosion sont évitées.

Le surmoulage permet une continuité de matière complète entre la couche de matière qui vient protéger le dispositif et l'élément en matière plastique de sorte qu'il ne reste aucune bulle d'air capable de venir perturber le passage des ondes électromagnétiques.

Le procédé de fabrication selon l'invention peut optionnellement comprendre une ou plusieurs des caractéristiques suivantes :
- on positionne la piste chauffante sur la première face ;
- on positionne la plaque de connexion dans le logement de façon affleurante avec la première face ;
- on positionne la piste chauffante sur l'élément en matière plastique à une température qui permet de noyer au moins partiellement la piste chauffante dans l'élément en matière plastique ;
- on réalise un orifice adapté au passage de la broche, et on positionne la broche dans cet orifice de façon à ce que ladite broche fasse saillie sur la seconde face ;
- on maintient en position la plaque de connexion au moyen d'un clipage de la broche ;
- on positionne la piste chauffante en serpentin sur une des premières et seconde faces ;
- on positionne la piste chauffante selon une disposition compatible avec le passage des ondes électromagnétiques à travers l'élément en matière plastique ;
- on relie une ou plusieurs paires de plaques de connexion par une ou plusieurs pistes conductrices ;
- on utilise une broche avec une forme pointue perforante de sorte qu'on troue l'élément en matière plastique avec ladite broche lorsqu'on positionne la plaque de connexion sur une face dudit élément en matière plastique.

L'invention concerne également un élément de pièce de carrosserie de véhicule automobile comprenant au moins une paroi comprenant dans son épaisseur :
- au moins une plaque de connexion dotée d'au moins une broche faisant saillie sur une des faces de la paroi ;
- au moins une piste chauffante en contact avec ladite plaque de connexion.

L'élément de pièce de carrosserie selon l'invention peut optionnellement comprendre une ou plusieurs des caractéristiques suivantes :
- la paroi comprend :
   - un premier élément en matière plastique dont une face comprend au moins un logement dans lequel se trouve la plaque de connexion ;
   - un second élément recouvrant la face du premier élément portant la piste chauffante, le second élément étant réalisé par surmoulage.
- la piste chauffante est noyée dans l'élément en matière plastique ;
- la plaque de connexion est affleurante avec la face du premier élément portant la piste chauffante ;
- le logement est doté d'au moins un orifice adapté au passage de la broche ;
- la piste chauffante circule en serpentin sur la face du premier élément portant la piste chauffante ;
- la piste chauffante circule sur la plaque de connexion selon une disposition compatible avec le passage des ondes électromagnétiques sur l'élément en matière plastique ;
- la broche comporte une languette de clipage apte à clipper la plaque de connexion sur le premier élément ;
- une ou plusieurs paires de plaques de connexion sont reliées par une ou plusieurs pistes conductrices ;
- la broche a une forme apte à perforer le premier élément lorsqu'on positionne la plaque de connexion dans le logement.

Nous allons maintenant présenter un mode de réalisation de l'invention donné à titre d'exemple non limitatif et à l'aide des figures annexées sur lesquelles :
- les figures 1A à 1D illustrent les différentes étapes du procédé de fabrication d'un élément de pièce de carrosserie selon l'invention, la figure finale 1D correspond à une vue en coupe AA du dispositif final tel que représenté sur la figure 4 avec en plus la mise en place du surmoulage;
- la figure 2 est une vue en perspective d'une partie d'une première face d'un élément en matière plastique qui comprend un logement.
- la figure 3 est une vue en perspective d'une plaque de connexion dotée d'une broche.
- la figure 4 est une vue en perspective d'un élément en matière plastique qui comprend deux logements sur une première face avec deux plaques de connexion positionnées de façon affleurante, et une piste chauffante posée en serpentin sur ladite première face de la paroi et sur chacun des deux connecteurs.

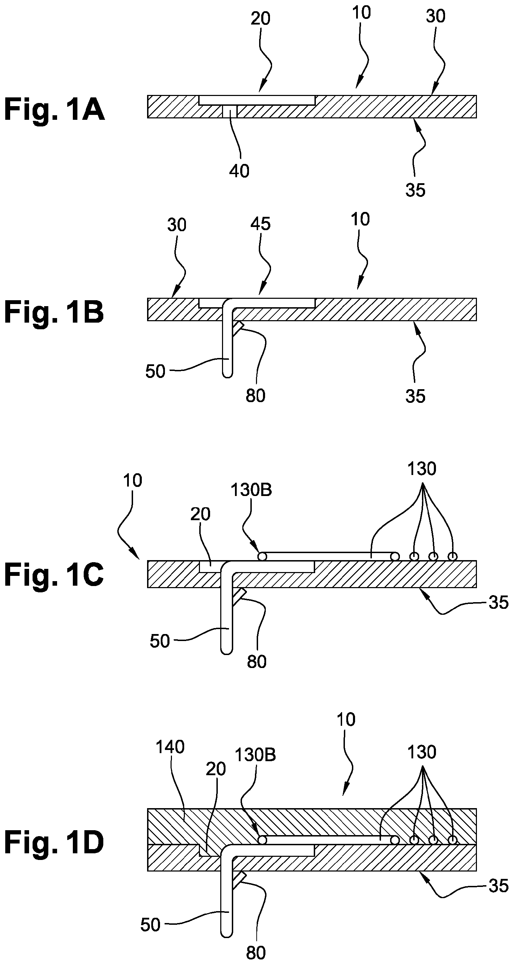

Comme illustré sur les figures 1A à 1D, le procédé de fabrication d'un élément en matière plastique 10 d'une pièce de carrosserie comporte les étapes suivantes :
- on fabrique un élément en matière plastique 10 doté d'au moins un logement 20 situé sur une première face 30 de l'élément en matière plastique 10 ;
- on positionne au moins une plaque de connexion 45 dotée d'une broche 50 dans le logement 20, de façon à ce que la broche 50 fasse saillie sur une seconde face 35 de l'élément en matière plastique 10 opposée à la première face 30 ;
- on positionne sur une des première et seconde faces 30, 35 au moins une piste chauffante 130 en contact avec la plaque de connexion 45 ;
- on surmoule la face 30, 35 de l'élément 10 en matière plastique portant la piste chauffante 130.

Nous allons maintenant décrire un exemple particulier de réalisation du procédé selon l'invention, en référence aux figues 1A à 1D.

Selon cet exemple, le logement 20 a une forme en creux et l'élément 10 comporte un orifice 40 en forme de fente au fond du logement 20. Cet orifice 40 traverse l'élément en matière plastique 10 et débouche sur la deuxième face 35 de l'élément en matière plastique 10.

La géométrie du logement 20 est adaptée à la forme de la plaque de connexion 45, c'est-à-dire que la taille, la forme et la profondeur du logement 20 permettent d'assembler la plaque de connexion 45 de façon affleurante.

On entend par « affleurant » le fait que des surfaces de deux éléments une fois un premier élément positionné dans un logement d'un second élément ne présente pas de discontinuité ni en hauteur, ni en largeur.

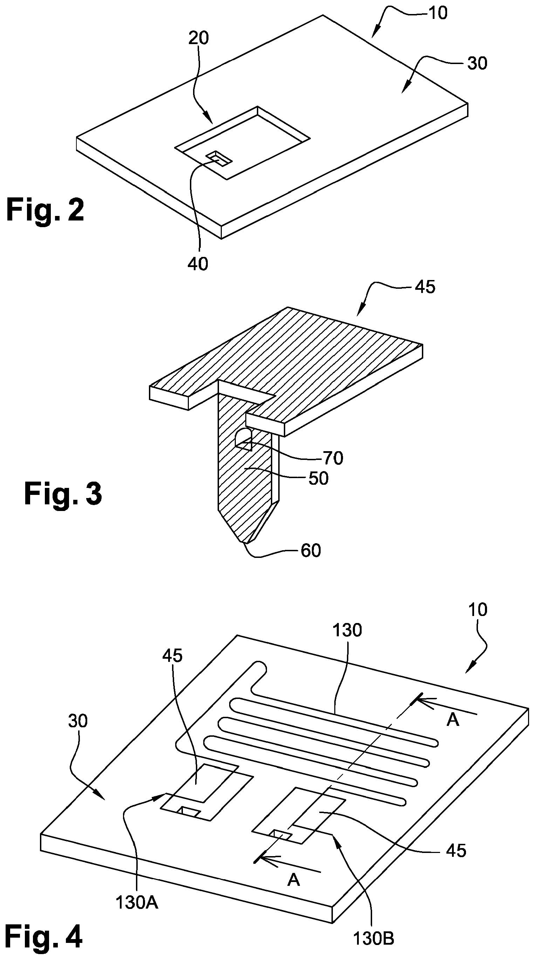

On fabrique par ailleurs la plaque de connexion 45 dans un alliage métallique conducteur de manière à ce qu'elle soit dotée d'une broche 50 dont l'extrémité 60 a une forme pointue. La broche 50 est fabriquée en repliant une première languette à environ 90° par rapport à la plaque de connexion 45. La lan guette peut également être directement moulée dans sa position définitive. Un autre orifice rectangulaire 70 apparaît sur la broche 50 telle que représentée sur la figure 2 : il s'agit en fait de l'orifice laissé libre par le pliage d'une languette de clipage 80 plus petite que la première languette 50 et pliée à environ 45° une fois la plaque de connexion 45 positionnée dans le logement 20. Ladite languette de clipage 80 est ainsi pliée jusqu'à prendre appui sur la deuxième face 90 de l'élément en matière plastique 10 afin de bloquer la plaque de connexion 45 dans sa position définitive une fois que la plaque de connexion 45 est en place dans le logement 20 de l'élément en matière plastique 10.

Comme illustré sur la figure 3, on positionne dans deux logements aménagés sur une première face 100 de l'élément en matière plastique 10 deux plaques de connexion identiques 120 de façon affleurante avec ladite première face 100. On déploie alors la piste chauffante 130 sur la première face 100 en commençant par positionner une première extrémité 130A de la piste chauffante sur la première face 100 de l'élément en matière plastique 10 à proximité d'une première plaque conductrice 120. On fait suivre alors un chemin à cette piste chauffante 130 qui :
- passe dans un premier temps sur la première face 100 de l'élément en matière 10,
- puis passe sur la première plaque de connexion 120,
- puis suit un chemin en serpentin sur la première face 100 de l'élément en matière plastique 10,
- puis passe ensuite sur la deuxième plaque de connexion 120,
- et enfin passe sur la première face 100 de l'élément en matière 10.

La deuxième extrémité de la piste chauffante 130B est donc positionnée sur la première face 100 de l'élément en matière plastique 10 à proximité de la deuxième plaque de connexion 120B. Le bon positionnement de la piste chauffante est très important car c'est de la qualité de l'alignement que va dépendre le bon contact entre la piste chauffante et les plaques de connexion 45 ainsi que la perméabilité aux ondes électromagnétiques : le parallélisme des lignes droites du chemin de la piste chauffante est le garant d'une bonne transparence aux ondes électromagnétiques.

Grâce au positionnement de façon affleurante des deux plaques de connexion avec la première face 100, on évite la création de recoins et de différences de niveau qui seraient source de bulle d'air, grâce à un surmoulage sur une surface plane. En effet, les bulles d'air perturbent, voire empêchent le passage d'ondes électromagnétiques.

De plus, on peut envisager de positionner la piste chauffante 130 sur l'élément en matière plastique 10 à une température qui permet de noyer au moins partiellement, par exemple 50% (de l'épaisseur), la piste chauffante 130 dans l'élément en matière plastique 10 pour maintenir de façon encore plus robuste la position de cette piste sur l'élément en matière plastique 10 avant les étapes suivantes.

Un surmoulage 140 du dispositif décrit ci-dessus est alors effectué et recouvre l'ensemble des deux plaques de connexion 120 et de la piste chauffante 130 comme illustré sur la figure 4. Grâce à ce surmoulage, une parfaite étanchéité est assurée pour l'ensemble du dispositif.

Le dispositif est positionné sur l'élément en matière plastique lorsque cet élément en matière plastique se trouve déjà dans sa forme finale, aucune action relative au galbage de cette pièce n'est prévue à la suite du surmoulage ce qui garantit la robustesse de la continuité de la matière conductrice du dispositif final.

L'invention n'est pas limitée aux modes de réalisation présentés et d'autres modes de réalisation apparaîtront clairement à l'homme du métier. Il est notamment possible de donner au logement et à la plaque de connexion toute autre forme géométrique. L'élément en matière plastique peut être obtenu par moulage par injection, il peut être aussi réalisé en matériau composite. L'orifice pour faire passer la broche à travers l'élément plastique peut être obtenu par perforation de l'élément plastique grâce à la forme pointue de la broche. Il est également possible de positionner la piste chauffante sur la deuxième face de l'élément en matière plastique en contact avec les broches et de réaliser le surmoulage sur ladite deuxième face de l'élément en matière plastique en couvrant les broches et la piste chauffante.

Il est également possible de créer directement le logement des plaques de connexion en positionnant ces plaques de connexion directement dans le moule de l'élément en matière plastique 10.

Avantageusement, on choisit un matériau pour la piste chauffante 130 ayant une bonne accroche mécanique et/ou chimique, à la fois vis-à-vis de la matière de la plaque de connexion 45 et celle de l'élément plastique 10.

Il est également possible d'ajouter une opération de soudure de la piste chauffante avec la plaque de connexion avant la phase de surmoulage.

Afin d'optimiser la fonction de dégivrage des moyens chauffants, la distance entre la piste chauffante 130 et la surface externe du surmoulage est avantageusement inférieure à 6mm.

### Nomenclature

10 élément en matière plastique
20 logement
30 première face de l'élément en matière plastique 10
35 seconde face de l'élément en matière plastique 10, opposée à la première face 30
40 orifice
45 plaque de connexion
50 broche
60 extrémité de broche 50
70 orifice rectangulaire de la broche 50
80 languette de clipage
130A première extrémité de la piste chauffante
130B deuxième extrémité de la piste chauffante
130 piste chauffante
140 surmoulage

## Revendications

1. Procédé de fabrication d'un élément d'une pièce de carrosserie dans lequel
- on fabrique un élément en matière plastique (10) doté d'au moins un logement (20) situé sur une première face (30) dudit élément (10);
- on positionne au moins une plaque de connexion (45) dotée d'une broche (50) dans ledit logement (20), de façon à ce que ladite broche (50) fasse saillie sur une seconde face (35) dudit élément en matière plastique (10) opposée à la première face (30) ;
- on positionne sur une des première et seconde faces (30,35) au moins une piste chauffante (130) en contact avec la plaque de connexion (45);
- on surmoule la face (30,35) de l'élément en matière plastique (10) portant la piste chauffante (130).

2. Procédé selon la revendication précédente, dans lequel on positionne la piste chauffante (130) sur la première face (30).

3. Procédé selon l'une des revendications précédentes, dans lequel on positionne la plaque de connexion (45) dans le logement (20) de façon affleurante avec la première face (30).

4. Procédé selon l'une des revendications précédentes, dans lequel on positionne la piste chauffante (130) sur l'élément en matière plastique (10) à une température qui permet de noyer au moins partiellement la piste chauffante (130) dans l'élément en matière plastique (10).

5. Procédé selon l'une des revendications précédentes, dans lequel lors de la fabrication de l'élément en matière plastique (10) on réalise un orifice (40) adapté au passage de la broche (50), et on positionne la broche (50) dans cet orifice (40) de façon à ce que ladite broche (50) fasse saillie sur la seconde face (35).

6. Procédé selon la revendication précédente, dans lequel on maintient en position la plaque de connexion (45) au moyen d'un clipage de la broche (50).

7. Procédé selon l'une des revendications précédentes, dans lequel on positionne la piste chauffante (130) en serpentin sur une des première et seconde faces (30,35).

8. Procédé selon l'une des revendications précédente, dans lequel on positionne la piste chauffante (130) selon une disposition compatible avec le passage des ondes électromagnétiques à travers l'élément en matière plastique (10).

9. Procédé selon l'une des revendications précédente, dans lequel on relie une ou plusieurs paires de plaques de connexion (45) par une ou plusieurs pistes conductrices (130).

10. Procédé selon l'une des revendications précédentes, dans lequel on utilise une broche (50) avec une forme pointue perforante (60) de sorte qu'on troue l'élément en matière plastique (10) avec ladite broche (50) lorsqu'on positionne la plaque de connexion (45) sur une face (30, 35) dudit élément en matière plastique (10).

11. Élément de pièce de carrosserie en matière plastique, **caractérisé en ce qu'**il comporte au moins une paroi comprenant dans son épaisseur :
- au moins une plaque de connexion (45) dotée d'au moins une broche (50) faisant saillie sur une des faces (30, 35) de la paroi ;
- au moins une piste chauffante (130) en contact avec ladite plaque de connexion (45).

12. Élément de pièce de carrosserie en matière plastique selon la précédente revendication, dans lequel la paroi comprend :
- un premier élément en matière plastique (10) dont une face (30, 35) comprend au moins un logement (20) dans lequel se trouve la plaque de connexion (50) ;
- un second élément (140) recouvrant la face du premier élément (10) portant la piste chauffante (130), le second élément (140) étant réalisé par surmoulage.

13. Élément de pièce de carrosserie en matière plastique selon l'une des revendications 11 ou 12, dans lequel la piste chauffante (130) est noyée dans l'élément en matière plastique (10).

14. Élément de pièce de carrosserie selon l'une des revendications 11 à 13, dans lequel la plaque de connexion (45) est affleurante avec la face du premier élément (10) portant la piste chauffante (130).

15. Élément de pièce de carrosserie en matière plastique selon l'une des revendications 11 à 14, dans lequel le logement (20) est doté d'au moins un orifice (40) adapté au passage de la broche (50).

16. Élément de pièce de carrosserie selon l'une des revendications 11 à 15, dans lequel la piste chauffante (130) circule en serpentin sur la face (30) du premier élément (10) portant la piste chauffante (130).

17. Élément de pièce de carrosserie en matière plastique selon l'une des revendications 11 à 16, dans lequel la piste chauffante (130) circule sur la plaque de connexion (45) selon une disposition compatible avec le passage des ondes électromagnétiques sur l'élément en matière plastique (10).

18. Élément de pièce de carrosserie en matière plastique selon l'une des revendications 11 à 17, dans lequel la broche (50) comporte une languette de clipage (80) apte à clipper la plaque de connexion (45) sur le premier élément (10).

19. Élément de pièce de carrosserie en matière plastique selon l'une des revendications 11 à 18, dans lequel une ou plusieurs paires de plaques de connexion (45) sont reliées par une ou plusieurs pistes conductrices (130).

20. Élément de pièce de carrosserie en matière plastique selon l'une des revendications 11 à 19, dans lequel la broche (50) a une forme apte à perforer le premier élément (10) lorsqu'on positionne la plaque de connexion (45) dans le logement (20).

## Patentansprüche

1. Verfahren zur Herstellung eines Elements eines Karosserieteils, wobei:
- ein Element aus Kunststoff (10) hergestellt wird, das mit wenigstens einer Aufnahme (20), die sich auf einer ersten Fläche (30) des Elements (10) befindet, versehen ist;
- wenigstens eine Verbindungsplatte (45), die mit einem Stift (50) versehen ist, in der Aufnahme (20) so positioniert wird, dass der Stift (50) über eine zweite Fläche (35) des Elements aus Kunststoff (10), die der ersten Fläche (30) gegenüberliegt, hinausragt;
- auf einer der ersten und zweiten Fläche (30, 35) wenigstens eine Heizbahn (130) in Kontakt mit der Verbindungsplatte (45) positioniert wird;
- die Fläche (30, 35) des Elements aus Kunststoff (10), die die Heizbahn (130) trägt, aufgeformt wird.

2. Verfahren nach dem vorhergehenden Anspruch, wobei die Heizbahn (130) auf der ersten Fläche (30) positioniert wird.

3. Verfahren nach einem der vorhergehenden Ansprüche, wobei die Verbindungsplatte (45) in der Aufnahme (20) flächenbündig mit der ersten Fläche (30) positioniert wird.

4. Verfahren nach einem der vorhergehenden Ansprüche, wobei die Heizbahn (130) auf dem Element aus Kunststoff (10) bei einer Temperatur positioniert wird, die gestattet, die Heizbahn (130) wenigstens teilweise in das Element aus Kunststoff (10) einzubetten.

5. Verfahren nach einem der vorhergehenden Ansprüche, wobei bei der Herstellung des Elements aus Kunststoff (10) eine Öffnung (40) realisiert wird, die für den Durchtritt des Stifts (50) angepasst ist, und der Stift (50) in dieser Öffnung (40) so positioniert wird, dass der Stift (50) über die zweite Fläche (35) hinausragt.

6. Verfahren nach dem vorhergehenden Anspruch, wobei die Position der Verbindungsplatte (45) mittels eines Einrastens des Stifts (50) gehalten wird.

7. Verfahren nach einem der vorhergehenden Ansprüche, wobei die Heizbahn (130) serpentinenförmig auf einer der ersten und zweiten Fläche (30, 35) positioniert wird.

8. Verfahren nach einem der vorhergehenden Ansprüche, wobei die Heizbahn (130) gemäß einer Anordnung positioniert wird, die mit dem Leiten der elektromagnetischen Wellen durch das Element aus Kunststoff (10) kompatibel ist.

9. Verfahren nach einem der vorhergehenden Ansprüche, wobei ein oder mehrere Paare von Verbindungsplatten (45) durch eine oder mehrere Leiterbahnen (130) verbunden werden.

10. Verfahren nach einem der vorhergehenden Ansprüche, wobei ein Stift (50) mit einer lochformenden spitzen Form (60) verwendet wird, so dass das Element aus Kunststoff (10) mit dem Stift (50) gelocht wird, wenn die Verbindungsplatte (45) auf einer Fläche (30, 35) des Elements aus Kunststoff (10) positioniert wird.

11. Element eines Karosserieteils aus Kunststoff, **dadurch gekennzeichnet, dass** es wenigstens eine Wand aufweist, die in ihrer Dicke Folgendes umfasst:
- wenigstens eine Verbindungsplatte (45), die mit einem Stift (50) versehen ist, der über eine der Flächen (30, 35) der Wand hinausragt;
- wenigstens eine Heizbahn (130) in Kontakt mit der Verbindungsplatte (45).

12. Element eines Karosserieteils aus Kunststoff nach dem vorhergehenden Anspruch, wobei die Wand umfasst:
- ein erstes Element aus Kunststoff (10), von dem eine Fläche (30, 35) wenigstens eine Aufnahme (20) umfasst, in der sich die Verbindungsplatte (45) befindet;
- ein zweites Element (140), das die Fläche des ersten Elements (10), die die Heizbahn (130) trägt, bedeckt, wobei das zweite Element (140) durch Aufformen realisiert ist.

13. Element eines Karosserieteils aus Kunststoff nach einem der Ansprüche 11 oder 12, wobei die Heizbahn (130) in das Element aus Kunststoff (10) eingebettet ist.

14. Element eines Karosserieteils nach einem der Ansprüche 11 bis 13, wobei die Verbindungsplatte (45) mit der Fläche des ersten Elements (10), die die Heizbahn (130) trägt, flächenbündig ist.

15. Element eines Karosserieteils aus Kunststoff nach einem der Ansprüche 11 bis 14, wobei die Aufnahme (20) mit wenigstens einer Öffnung (40) versehen ist, die für den Durchtritt des Stifts (50) angepasst ist.

16. Element eines Karosserieteils nach einem der Ansprüche 11 bis 15, wobei die Heizbahn (130) auf der Fläche (30) des ersten Elements (10), die die Heizbahn (130) trägt, serpentinenförmig zirkuliert.

17. Element eines Karosserieteils aus Kunststoff nach einem der Ansprüche 11 bis 16, wobei die Heizbahn (130) auf der Verbindungsplatte (45) gemäß einer Anordnung zirkuliert, die mit dem Leiten der elektromagnetischen Wellen auf dem Element aus Kunststoff (10) kompatibel ist.

18. Element eines Karosserieteils aus Kunststoff nach einem der Ansprüche 11 bis 17, wobei der Stift (50) eine Einrastzunge (80) aufweist, die imstande ist, die Verbindungsplatte (45) auf dem ersten Element (10) einzurasten.

19. Element eines Karosserieteils aus Kunststoff nach einem der Ansprüche 11 bis 18, wobei ein oder mehrere Paare von Verbindungsplatten (45) durch eine oder mehrere Leiterbahnen (130) verbunden sind.

20. Element eines Karosserieteils aus Kunststoff nach einem der Ansprüche 11 bis 19, wobei der Stift (50) eine Form hat, die imstande ist, das erste Element (10) zu perforieren, wenn die Verbindungsplatte (45) in der Aufnahme (20) positioniert wird.

## Claims

1. Method for manufacturing an element of a body part wherein:
- a plastic element (10) is manufactured with at least one housing (20) located on a first face (30) of the component (10);
- at least one connector plate (45) with a pin (50) is positioned in said housing (20), so that said pin (50) protrudes from a second face (35) of said plastic element (10) opposite the first face (30);
- at least one heating track (130) is positioned on one of the first and second faces (30,35) in contact with the connection plate (45);
- the face (30.35) of the plastic element (10) carrying the heating track (130) is overmoulded.

2. Method according to the preceding claim, wherein the heating track (130) is positioned on the first face (30).

3. Method according to one of the preceding claims, wherein the connection plate (45) is positoned in the housing (20) so as to be flush with the first face (30).

4. Method according to one of the preceding claims, wherein the heating track (130) is positioned on the plastic element (10) at a temperature which allows the heating track (130) to be at least partially embedded in the plastic element (10).

5. Method according to one of the preceding claims, wherein in the manufacture of the plastic element (10) an orifice (40) adapted to the passage of the pin (50) is made, and the pin (50) is positioned in said orifice (40) so that said pin (50) protrudes on the second face (35).

6. Method according to the preceding claim, wherein the connection plate (45) is held in position by means of a clipping of the pin (50).

7. Method according to one of the preceding claims, wherein the heating track (130) is positioned in a serpentine pattern on one of the first and second faces (30,35).

8. Method according to one of the preceding claims, wherein the heating track (130) is positioned in a arrangement compatible with the passage of electromagnetic waves through the plastic element (10).

9. Method according to one of the preceding claims, wherein one or more pairs of connector plates (45) are connected by one or more conductive tracks (130).

10. Method according to one of the preceding claims, wherein a pin (50) with a perforating pointed shape (60) is used so that the plastic element (10) is pierced with said pin (50) when the connection plate (45) is positioned on one face (30, 35) of said plastic element (10).

11. Plastic body part element, **characterised in that** it comprises at least one wall comprising in its thickness:
- at least one connector plate (45) having at least one pin (50) projecting from one of the faces (30, 35) of the wall;
- at least one heating track (130) in contact with said connection plate (45).

12. Plastic body part element according to the preceding claim, wherein the wall comprises:
a first plastic element (10), one side (30, 35) of the first plastic element (10) comprising at least one housing (20) in which the connection plate (50) is positioned;
- a second element (140) covering the face of the first element (10) carrying the heating track (130), the second element (140) being made by overmoulding.

13. Plastic body part element according to one of claims 11 or 12, wherein the heating track (130) is embedded in the plastic element (10).

14. Plastic body part element according to one of claims 11 to 13, wherein the connection plate (45) is flush with the face of the first member (10) carrying the heating track (130).

15. Plastic body part element according to one of claims 11 to 14, wherein the housing (20) is provided with at least one hole (40) suitable for the passage of the pin (50).

16. Plastic body part element according to one of claims 11 to 15, wherein the heating track (130) flows in a serpentine on the face (30) of the first member carrying the heating track (130).

17. Plastic body part element according to one of claims 11 to 16, wherein the heating track (130) flows over the connection plate (45) in a arrangement compatible with the passage of electromagnetic waves over the plastic element (10).

18. Plastic body part element according to one of claims 11 to 17, wherein the pin (50) has a clipping tab (80) capable of clipping the connection plate (45) onto the first element (10).

19. Plastic body part element according to one or more of claims 11 to 18, wherein one or more pairs of connection plates (45) are connected by one or more conductive tracks (130).

20. Plastic body part element according to any one of claims 11 to 19, wherein the pin (50) has a shape capable of perforating the first member (10) when the connection plate (45) is positioned in the housing (20).
